# EUROPEAN PATENT APPLICATION

(11) **EP 1 542 227 A1**
(43) Date of publication of application: **15.06.2005**
(21) Application number: 03090431.2
(22) Date of filing: 11.12.2003
(51) Int. Cl.: G11B 20/00, H04H 1/00

(54) **Method and apparatus for transmitting watermark data bits using a spread spectrum, and for regaining watermark data bits embedded in a spread spectrum**

(71) Applicant: DEUTSCHE THOMSON-BRANDT GMBH, 78048 Villingen-Schwenningen (DE)
(72) Inventor: Baum, Peter G., 30539 Hannover (DE); Voessing, Walter, 30455 Hannover (DE)
(74) Representative: Hartnack, Wolfgang, Dipl.-Ing.

(57) **Abstract**

Spread spectrum technology and the related inserted or added information signal can be used for implementing watermarking digital audio signals. A known processing for retrieving at receiver or decoder side the watermark signal information bit from the spread spectrum is convolving the received or replayed spectrum with a spreading function that is time-inverse with respect to the original spreading function. If BPSK modulation was used for applying the spread spectrum function, the output is a peak at the middle of the sequence of correlation values, the sign of such peak representing the value of the desired watermark signal information bit. According to the invention, in order to cope with echo distortions, two or more orthogonal spreading sequences are used at encoder side with the original or encoded audio signal in baseband. When applying the corresponding time-inverse orthogonal spreading sequences at decoder side, echoes that are longer than each one of spreading sequence's lengths can be fully removed. The spreading sequences applied can be modified at decoder side according to estimated echo delay values.

## Description

The invention relates to a method and an apparatus for transmitting watermark data bits using a spread spectrum, and to a method and an apparatus for regaining watermark data bits embedded in a spread spectrum.

### Background

'Watermarking' means imperceptible insertion of information into multimedia data, e.g. audio data and/or video data. The insertion of additional information data, such as a number or a text, into multimedia data is performed through slight modification of the original multimedia data. Watermarking can be used for e.g. copyright protection, labelling (e.g. URL of a site or a site's logo), monitoring, tamper proofing, or conditional access.
Applying 'spread spectrum' in a (RF) communications system, means that a small baseband signal bandwidth is intentionally spread over a larger bandwidth by injecting or adding a higher-frequency signal, or spreading function. As a direct consequence, the energy used for transmitting the signal is spread over a wider bandwidth, and appears as noise.
Spread spectrum technology and the related inserted or added information signal can be used for implementing watermarking of e.g. digital audio signals, whereby the spread spectrum can use the complete audio spectrum from 0Hz to one half of the sampling frequency. This spectrum carries the information of one bit. In a modification of such systems shorter spread spectrum sequences are used leading to band limited spread spectrum signals, so that several ones of the band limited spread spectrum signals can be added at different centre frequencies to the audio spectrum, at which centre frequencies the original audio signal has been notch filtered, in order to increase the bitrate of the watermark signals and/or to prevent attacks on the watermarked signals. In this watermark system the spread spectrum signals are modulated on a carrier.

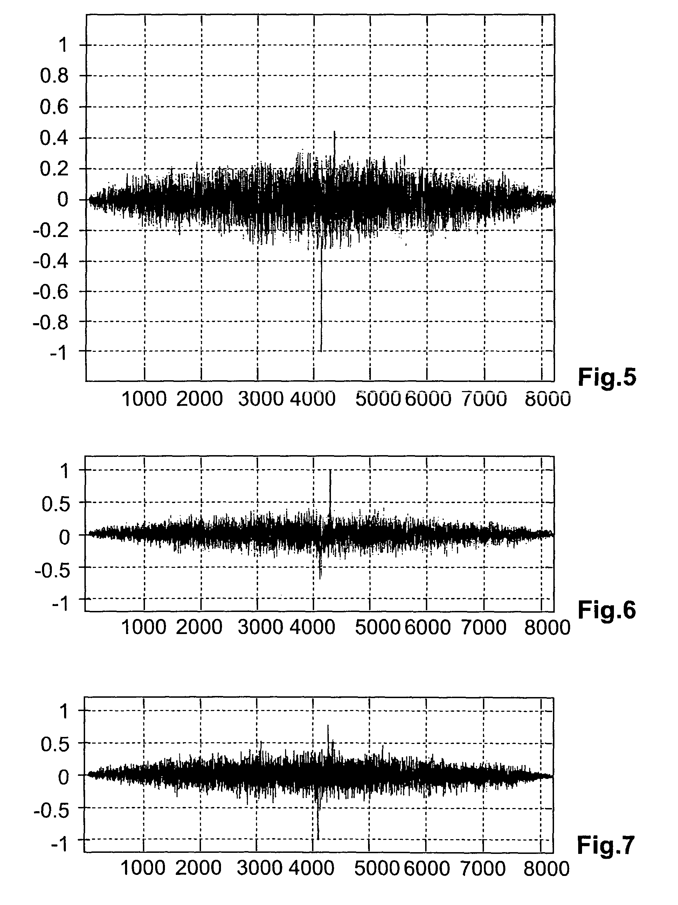

A known processing for retrieving at receiver or decoder side the watermark signal information bit from the spread spectrum is convolving the received or replayed spectrum with a spreading function that is time-inverse with respect to the original spreading function, which kind of processing is also called 'applying a matched filter'. If BPSK modulation was used for applying the spread spectrum function, the output of this process is a peak at the middle of the sequence of correlation values, whereby the sign of such peak represents the value of the desired watermark signal information bit, c.f. Fig. 5 which shows a negative peak in the convolution result. If QPSK was used two peaks will be present in the sequence of correlation values, whereby each peak represents one bit value.

### Invention

This decoding processing works fine in case undisturbed signal are received by the decoder. However, if the received input signals contain multipath or echo or reverberation distortions, the convolved output signals will contain more than one peak per watermark signal information bit (i.e. per convolution result) to be decoded so that, e.g. depending on the amplitude or power of the distortion peaks, it is difficult or in many cases even impossible to retrieve the correct watermark information bits.

A problem to be solved by the invention is to increase the robustness of spread spectrum systems against echo and reverberation distortions, and to reduce the number of erroneously demodulated watermark signal information bits. This problem is solved by the methods disclosed in claims 1 to 3. Corresponding apparatuses which utilise these methods are disclosed in claims 6 to 8, respectively.

In a first embodiment of the invention, two or more orthogonal spreading sequences or functions are combined at transmitter or encoder or source side with the original or encoded audio signal in baseband, i.e. without modulating the spreading sequences or functions on a carrier before combining them with the original or encoded audio signal. 'Orthogonal' spreading sequences or functions means that the cross-correlation of such sequences yields a zero-value result, or a very small-value result. When applying the corresponding time-inverse orthogonal spreading sequences or functions at receiver or decoder side, echoes that are longer than each one of spreading sequence's or function's lengths can be fully removed.

In a second embodiment of the invention the time-inverse versions of not necessarily orthogonal spreading sequences or functions are modified at receiver or decoder side according to pre-known or estimated echo delay values and fading parameters. In case of estimated echo delay values the delay time period measurements/calculations can be repeated for several succeeding audio signal frames before a valid delay time period value is formed.

Advantageously the number of watermark signal bit errors due to echoes caused by multipath or reverberated reception conditions is substantially decreased.

The features of the first and second embodiment can also be combined in that two or more orthogonal baseband spreading sequences or functions are used which are being modified at decoder side according to echo delay values and fading parameters.

In principle, the inventive method is suited for transmitting watermark data bits using a spread spectrum, said method including the steps:
- Modulating said watermark data bits on an encoder pseudo-noise sequence;
- Transforming said modulated encoder pseudo-noise sequence into the frequency domain and shaping it in amplitude according to the masking level curve of an audio signal together with which the watermark data bit information is to be transmitted or transferred, and transforming said shaped encoder pseudo-noise frequency domain sequence back into the time domain;
- Combining said inverse transformed encoder pseudo-noise frequency domain sequence with a current frame of data of said audio signal;
- Transmitting or transferring said combined audio signal frame or frames carrying said watermark data bits,
wherein the length of said encoder pseudo-noise sequence is one Nth of the length of a frame of said audio signal, N being an integer number greater one, and wherein N orthogonal encoder pseudo-noise sequences are used per frame of said audio signal for carrying out said combining for corresponding sections of a current frame.

In principle, the inventive method is suited for regaining watermark data bits embedded in a spread spectrum, whereby the corresponding original watermark data bits were modulated at encoder side on an encoder pseudo-noise sequence and said modulated encoder pseudo-noise sequence was transformed into the frequency domain and shaped in amplitude according to the masking level curve of an audio signal together with which the watermark data bit information was transmitted or transferred, and said shaped encoder pseudo-noise frequency domain sequence was transformed back into the time domain and was combined with a current frame of data of said audio signal, wherein the length of said encoder pseudo-noise sequence was one Nth of the length of a frame of said audio signal, N being an integer number greater one, wherein N orthogonal encoder pseudo-noise sequences were used per frame of said audio signal for carrying out said combining for corresponding sections of a current frame, said method including the steps:
- Receiving and synchronising said transmitted or transferred audio signal;
- Convolving each one of a corresponding section of said current frame of data of said audio signal with the corresponding one of time-inversed versions of the N orthogonal encoder pseudo-noise sequences;
- Determining, for each one of said sections, from the sign of the peak or peaks of the corresponding convolution result the value of a bit of said watermark data.

In principle, the inventive method is also suited for regaining watermark data bits embedded in a spread spectrum, whereby the corresponding original watermark data bits were modulated at encoder side on an encoder pseudo-noise sequence and said modulated encoder pseudo-noise sequence was transformed into the frequency domain and shaped in amplitude according to the masking level curve of an audio signal together with which the watermark data bit information was transmitted or transferred, and said shaped encoder pseudo-noise frequency domain sequence was transformed back into the time domain and was combined with a current frame of data of said audio signal, wherein the length of said encoder pseudo-noise sequence corresponded to the length of a frame of said audio signal and said encoder pseudo-noise sequence was used for carrying out said combining for a current frame, said method including the steps:
- Receiving and synchronising said transmitted or transferred audio signal;
- Determining in the received audio signal one or more echoes and the related echo delays;
- Constructing a modified decoder pseudo-noise sequence based on the time-inversed version of said encoder pseudo-noise sequence whereby, according to the echo delay or delays determined, correspondingly time-shifted versions of said time-inversed encoder pseudo-noise sequence are combined in order to construct said modified decoder pseudo-noise sequence;
- Convolving said current frame of data of said audio signal with said modified decoder pseudo-noise sequence;
- Determining from the sign of the peak or peaks of the convolution result the value of a bit of said watermark data.

In principle the inventive apparatus is suited for transmitting watermark data bits using a spread spectrum, said apparatus including:
- Means for modulating said watermark data bits on an encoder pseudo-noise sequence;
- Means for transforming said modulated encoder pseudo-noise sequence into the frequency domain and for shaping it in amplitude according to the masking level curve of an audio signal together with which the watermark data bit information is to be transmitted or transferred, and for transforming said shaped encoder pseudo-noise frequency domain sequence back into the time domain;
- Means for combining said inverse transformed encoder pseudo-noise frequency domain sequence with a current frame of data of said audio signal;
- Means for transmitting or transferring said combined audio signal frame or frames carrying said watermark data bits,
wherein the length of said encoder pseudo-noise sequence is one Nth of the length of a frame of said audio signal, N being an integer number greater one, wherein N orthogonal encoder pseudo-noise sequences are used per frame of said audio signal for carrying out said combining for corresponding sections of a current frame.

In principle the inventive apparatus is suited for regaining watermark data bits embedded in a spread spectrum, whereby the corresponding original watermark data bits were modulated at encoder side on an encoder pseudo-noise sequence and said modulated encoder pseudo-noise sequence was transformed into the frequency domain and shaped in amplitude according to the masking level curve of an audio signal together with which the watermark data bit information was transmitted or transferred, and said shaped encoder pseudo-noise frequency domain sequence was transformed back into the time domain and was combined with a current frame of data of said audio signal, wherein the length of said encoder pseudo-noise sequence was one Nth of the length of a frame of said audio signal, N being an integer number greater one, wherein N orthogonal encoder pseudo-noise sequences were used per frame of said audio signal for carrying out said combining for corresponding sections of a current frame, said apparatus including:
- Means for receiving and synchronising said transmitted or transferred audio signal;
- Means for convolving each one of a corresponding section of said current frame of data of said audio signal with the corresponding one of time-inversed versions of the N orthogonal encoder pseudo-noise sequences, and for determining, for each one of said sections, from the sign of the peak or peaks of the corresponding convolution result the value of a bit of said watermark data.

In principle the inventive apparatus is suited for regaining watermark data bits embedded in a spread spectrum, whereby the corresponding original watermark data bits were modulated at encoder side on an encoder pseudo-noise sequence and said modulated encoder pseudo-noise sequence was transformed into the frequency domain and shaped in amplitude according to the masking level curve of an audio signal together with which the watermark data bit information was transmitted or transferred, and said shaped encoder pseudo-noise frequency domain sequence was transformed back into the time domain and was combined with a current frame of data of said audio signal, wherein the length of said encoder pseudo-noise sequence corresponded to the length of a frame of said audio signal and said encoder pseudo-noise sequence was used for carrying out said combining for a current frame, said apparatus including:
- Means for receiving and synchronising said transmitted or transferred audio signal;
- Means for determining in the received audio signal one or more echoes and the related echo delays, and for constructing a modified decoder pseudo-noise sequence based on the time-inversed version of said encoder pseudo-noise sequence whereby, according to the echo delay or delays determined, correspondingly time-shifted versions of said time-inversed encoder pseudo-noise sequence are combined in order to construct said modified decoder pseudo-noise sequence;
- Means for convolving said current frame of data of said audio signal with said modified decoder pseudo-noise sequence, and for determining from the sign of the peak or peaks of the convolution result the value of a bit of said watermark data.

Advantageous additional embodiments of the invention are disclosed in the respective dependent claims.

### Drawings

Exemplary embodiments of the invention are described with reference to the accompanying drawings, which show in:
- Fig. 1: Watermark signal encoder and watermark signal decoder using spread spectrum technique;
- Fig. 2: Watermark signal decoder according to the second embodiment;
- Fig. 3: Spread spectrum signal in the decoder following time-inverse convolution, showing two successive spreading length portions each containing a (positive) bit signal, the second portion containing also a (negative) echo of the first portion bit signal;
- Fig. 4: The bit signals of Fig. 3 wherein the echo bit signal is removed by the inventive features according to the first embodiment;
- Fig. 5: Spread spectrum signal in the decoder following time-inverse convolution, showing one spreading length portion containing a (negative) bit signal without echo signal;
- Fig. 6: The bit signal of Fig.5 including an echo bit signal;
- Fig. 7: The bit signal of Fig. 6 wherein the echo bit signal is removed by the inventive features according to the second embodiment.

### Exemplary embodiments

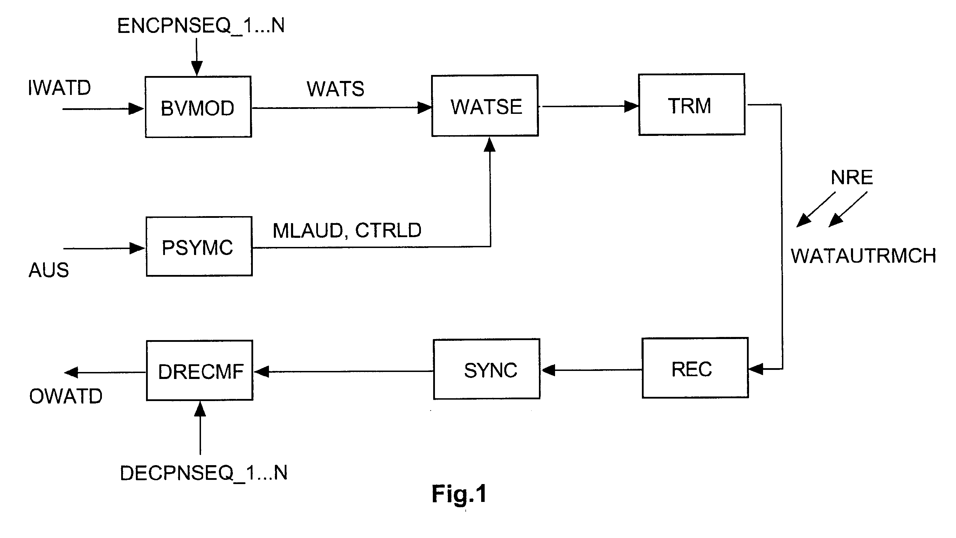

In the watermark signal encoder section in Fig. 1 an original audio input signal AUS is encoded, or processed such that the masking level threshold information for an encoding is retrieved, using a psycho-acoustic model calculator PSYMC. The resulting masking level threshold information MLAUD for the audio data frequency spectrum coefficients (resulting e.g. from an FFT or MDCT) of a current audio signal input frame are fed together with related control data or coding parameters CTRLD to a watermark shaping and embedding stage WATSE. Input watermark data IWATD enter a bit value modulation stage BVMOD in which a current bit value of the IWATD data is used to correspondingly modulate a current encoder pseudo-noise sequence section ENCPNSEQ_i. For example, if the current bit value is '+1', the encoder pseudo-noise sequence section ENCPNSEQ_i is left unchanged whereas, if the current bit value is '0' or '-1', the encoder pseudo-noise sequence section ENCPNSEQ_i is inverted. Sequence ENCFNSEQ_i consists of e.g. a 'random' distribution of '0' or '-1' and '+1'. If two different sequences ENCPNSEQ_1 and ENCPNSEQ_2 are used each of which has a length that is one half of the audio data frame length (of e.g. 4096 samples), two watermark data bits per audio frame can be transmitted. If N different sequences ENCPNSEQ_1 to ENCPNSEQ_N are used, each one of them has a length of 1/N of the audio data frame length, and N watermark data bits per audio frame can be transmitted.
According to the first embodiment of the invention these different sequences ENCPNSEQ_1 to ENCPNSEQ_N are orthogonal. 'Orthogonal' means that any pair of sequences out of the N sequences has a cross-correlation that has an output value of zero, or a very small output value near zero. According to the second embodiment of the invention a single encoder pseudo-noise sequence ENCPNSEQ is used.

The pieces of watermark signals WATS resulting from stage BVMOD are combined with, or added to, corresponding frame sections of spectral audio data in baseband fashion in the watermark shaping and embedding stage WATSE. This is performed in stage WATSE as follows. A current encoder pseudo-noise sequence section ENCPNSEQ_i is transformed into the frequency domain. In the frequency domain, this sequence is 'shaped' according to, i.e. its amplitudes envelope is made conforming to, the corresponding frame section masking level shape or curve in masking level threshold information MLAUD. In case there are two encoder pseudo-noise sequence sections per audio frame, sequence ENCPNSEQ_1 is shaped according to the masking level shape or curve in the first half of the audio frame and sequence ENCPNSEQ_2 is shaped according to the masking level shape or curve in the second half of the audio frame.
Following such shaping the encoder pseudo-noise sequence section ENCPNSEQ_i is inversely transformed back into the time domain. The inversely transformed sequence sections ENCPNSEQ_1 to ENCPNSEQ_N are added or combined with the time domain sample values of the current audio frame.
As an alternative, the encoder pseudo-noise sequence section ENCPNSEQ_i as shaped in the frequency domain can be combined with the frequency domain coefficient values of the current audio frame, whereby an encoded audio signal is transmitted via channel WATAUTRMCH.
The output signal of stage WATSE passes through transmitter stage TRM (which includes e.g. a D/A converter and/or an amplifier) and channel WATAUTRMCH to a watermark signal decoder or receiver.

Unintended, in the watermarked audio transmission channel WATAUTRMCH a noise or reverberation or echo signal NRE is added. This channel can be represented by an acoustic connection between a loudspeaker and a microphone.

In the first-embodiment watermark signal decoder section in Fig. 1 the distorted transmitted signal enters a receiver stage REC, wherein e.g. a coarse synchronisation and/or an A/D conversion is performed. Its output signal passes through a bit or fine synchronisation stage SYNC to a data recovery matched filter stage DRECMF, or time-inverse convolution stage DRECMF. This stage convolves, or filters, a current incoming audio frame, or a respective section of this frame, with a decoder pseudo-noise sequence ENCPNSEQ_i that is pre-known by, or stored in, the decoder and is time-inverse to the related encoder pseudo-noise sequence section ENCPNSEQ_i. In case two orthogonal encoder pseudo-noise sequence sections per audio frame were used in the watermark signal encoder, sequence DECPNSEQ_1 is convolved with the first half of the currently received audio frame and sequence DECPNSEQ_2 is convolved with the second half of the currently received audio frame.

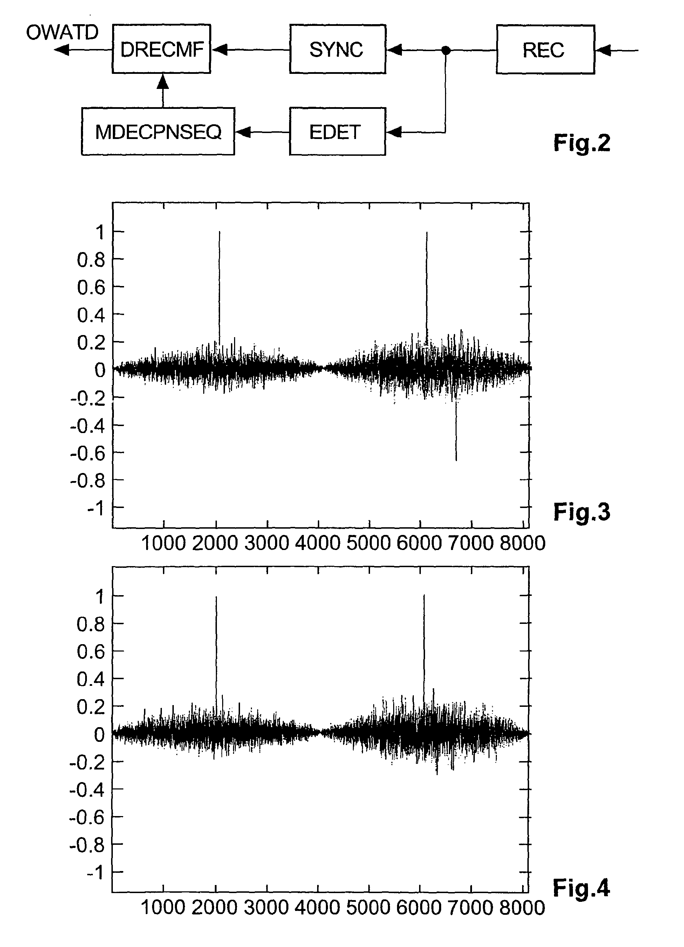

In Fig. 3 corresponding two successive spreading length portions resulting from this time-inverse convolution are depicted, each containing a (positive 1.0 valued peak) bit signal of the transmitted watermark data, the second portion containing also a (negative peak) echo of the first portion bit signal. Basically, a correctly transmitted watermark bit 'appears' as a peak in the middle of the 2^{*}N-1 intermediate correlation results. However, due to echo signals a peak could occur at the same or a different position. The related audio data frame had a length of 4096 samples. therefore the correlation with DECPNSEQ_1 and with DECPNSEQ_2 each provides the results for 4095 correlation steps.

According to the invention, after the watermark signal decoder receiver part is synchronised, in order to remove a negative echo peak signal in the DECPNSEQ_2 correlation result, either the 'wrong' position or the smaller amplitude > '-1' (or < '+1', respectively) or both facts are used in stage DRECMF to not considering such echo peak signals as valid watermark data bits, or to remove such echo peaks leading to a correlation output signal according to Fig. 4.

Stage DRECMF provides the watermark signal decoder output watermark data OWATD which, despite the NRE added on the transmission channel, correspond 100% or nearly 100% to the input watermark data IWATD.

In the second embodiment of the invention a single encoder pseudo-noise sequence ENCPNSEQ is used in the watermark signal encoder and a single correspondingly time-inverse decoder pseudo-noise sequence DECPNSEQ is used in the watermark signal decoder. Apart from that, the watermark signal encoder operates like in the first embodiment.

The watermark signal decoder stages REC, SYNC, and DRECMF operate like in the first embodiment. However, the output signal of receiver stage REC is also fed to an echo detection stage EDET in which echo, multipath or reverberation distortions are detectable and the related delays are calculated. The delay can be estimated using different known methods, e.g. by correlation of the received signal with the unmodified decoder pseudo-noise sequence for one or more frames.
In stage EDET a modified decoder spread spectrum or pseudo-noise sequence MDECPNSEQ is formed by shifting or multiple shifting the position of the original decoder pseudo-noise sequence DECPNSEQ according to the calculated delay or delays, respectively. The output modified decoder spread spectrum sequence MDECPNSEQ is the sum of the original sequence DECPNSEQ and correspondingly delayed (and possibly amplified due to fading) versions of the original sequence, whereby the corresponding cut-off tails of the delayed versions are not considered.

Fig. 5 shows a corresponding convolution processing output for a signal received without echo. The negative data bit-related peak at position 4096 can clearly be seen.

Fig. 6 shows a corresponding convolution processing output of the same audio frame but including an echo. The main peak, which has an amplitude that is even greater than that of the correct peak in the middle, is located at the wrong position and has the wrong sign or direction.

Fig. 7 shows a corresponding convolution processing output of the same audio frame, which upon receipt included an echo but which was convolved or filtered with a correspondingly modified sequence MDECPNSEQ. In this case the wrong peak has a significantly reduced amplitude whereas the amplitude of the correct data bit peak has the correct amplitude '-1' and is therefore correctly identified.

In stage DRECMF the delay measurements, or the correlation/convolution results, for several (succeeding) audio frames are evaluated before a final result on the echo delay is formed.

As an alternative, the encoder pseudo-noise sequence section ENCPNSEQ_i or ENCPNSEQ, respectively, as shaped in the frequency domain can be combined with the frequency domain coefficient values of the current audio frame, whereby an encoded audio signal is transmitted via channel WATAUTRMCH and is correspondingly decoded in a watermark signal decoder.

The pseudo-noise sequences used are calculated by a given algorithm based on a start value. In order to transmit secret watermark data, the start value or even that algorithm can be encrypted and transmitted to the watermark signal decoder wherein it is used to calculate the decoder pseudo-noise sequences DECPNSEQ_i and the modified decoder pseudo-noise sequence MDECPNSEQ.

Instead of audio signals, video signals can be used correspondingly for transmitting watermark data according to the invention.

## Claims

1. Method for transmitting watermark data bits (IWATD) using a spread spectrum, said method including the steps:
- modulating (BVMOD) said watermark data bits on an encoder pseudo-noise sequence (ENCPNSEQ);
- Transforming (WATSE) said modulated encoder pseudo-noise sequence (WATS) into the frequency domain and shaping it in amplitude according to the masking level curve of an audio signal together with which the watermark data bit information is to be transmitted or transferred, and transforming (WATSE) said shaped encoder pseudo-noise frequency domain sequence back into the time domain;
- Combining (WATSE) said inverse transformed encoder pseudo-noise frequency domain sequence with a current frame of data of said audio signal;
- Transmitting or transferring (TRM) said combined audio signal frame or frames carrying said watermark data bits,
wherein the length of said encoder pseudo-noise sequence (ENCPNSEQ) is one Nth of the length of a frame of said audio signal, N being an integer number greater one,
wherein N orthogonal encoder pseudo-noise sequences (ENCPNSEQ) are used per frame of said audio signal for carrying out said combining for corresponding sections of a current frame.

2. Method for regaining watermark data bits (IWATD) embedded in a spread spectrum, whereby the corresponding original watermark data bits were modulated (BVMOD) at encoder side on an encoder pseudo-noise sequence (ENCPNSEQ) and said modulated encoder pseudo-noise sequence (WATS) was transformed (WATSE) into the frequency domain and shaped in amplitude according to the masking level curve (PSYMC) of an audio signal together with which the watermark data bit information was transmitted or transferred (TRM), and said shaped encoder pseudo-noise frequency domain sequence was transformed (WATSE) back into the time domain and was combined with a current frame of data of said audio signal, wherein the length of said encoder pseudo-noise sequence (ENCPNSEQ) was one Nth of the length of a frame of said audio signal, N being an integer number greater one, wherein N orthogonal encoder pseudo-noise sequences (ENCPNSEQ) were used per frame of said audio signal for carrying out said combining for corresponding sections of a current frame,
said method including the steps:
- Receiving (REC, SYNC) and synchronising said transmitted or transferred audio signal;
- Convolving (DRECMF) each one of a corresponding section of said current frame of data of said audio signal with the corresponding one of time-inversed versions (DECPNSEQ) of the N orthogonal encoder pseudo-noise sequences;
- Determining (DRECMF), for each one of said sections, from the sign of the peak or peaks of the corresponding convolution result the value of a bit of said watermark data (OWATD).

3. Method for regaining watermark data bits (IWATD) embedded in a spread spectrum, whereby the corresponding original watermark data bits were modulated (BVMOD) at encoder side on an encoder pseudo-noise sequence (ENCPNSEQ) and said modulated encoder pseudo-noise sequence (WATS) was transformed (WATSE) into the frequency domain and shaped in amplitude according to the masking level curve (PSYMC) of an audio signal together with which the watermark data bit information was transmitted or transferred (TRM), and said shaped encoder pseudo-noise frequency domain sequence was transformed (WATSE) back into the time domain and was combined with a current frame of data of said audio signal, wherein the length of said encoder pseudo-noise sequence (ENCPNSEQ) corresponded to the length of a frame of said audio signal and said encoder pseudo-noise sequence (ENCPNSEQ) was used for carrying out said combining for a current frame, said method including the steps:
- Receiving (REC, SYNC) and synchronising said transmitted or transferred audio signal;
- Determining (EDET) in the received audio signal one or more echoes and the related echo delays;
- Constructing a modified decoder pseudo-noise sequence (MDECPNSEQ) based on the time-inversed version of said encoder pseudo-noise sequence (ENCPNSEQ) whereby, according to the echo delay or delays determined, correspondingly time-shifted versions of said time-inversed encoder pseudo-noise sequence are combined in order to construct said modified decoder pseudo-noise sequence;
- Convolving (DRECMF) said current frame of data of said audio signal with said modified decoder pseudo-noise sequence (MDECPNSEQ);
- Determining (DRECMF) from the sign of the peak or peaks of the convolution result the value of a bit of said watermark data (OWATD).

4. Method according to claim 3, wherein the length of said encoder pseudo-noise sequence (ENCPNSEQ) is one Nth of the length of a frame of said audio signal, N being an integer number greater one, wherein N orthogonal encoder pseudo-noise sequences (ENCPNSEQ) were used per frame of said audio signal for carrying out said combining for corresponding sections of a current frame,
and wherein, for said constructing step, the N time-inversed versions of said orthogonal encoder pseudo-noise sequences (ENCPNSEQ) for a current frame are assembled together before applying said combining,
and wherein each one of a corresponding section of said current frame of data of said audio signal is convolved (DRECMF) with the corresponding section of said modified decoder pseudo-noise sequence (MDECPNSEQ),
- and wherein, for each one of said sections, from the sign of the peak or peaks of the corresponding convolution result the value of a bit of said watermark data (OWATD) is determined (DRECMF).

5. Method according to claim 3 or 4 wherein, when determining (EDET) in the received audio signal one or more echoes and the related echo delays, the results for several audio frames are evaluated before a final result on the echo delay is formed.

6. Apparatus for transmitting watermark data bits (IWATD) using a spread spectrum, said apparatus including:
- Means (BVMOD) for modulating said watermark data bits on an encoder pseudo-noise sequence (ENCPNSEQ);
- Means (WATSE) for transforming said modulated encoder pseudo-noise sequence (WATS) into the frequency domain and for shaping it in amplitude according to the masking level curve of an audio signal together with which the watermark data bit information is to be transmitted or transferred, and for transforming said shaped encoder pseudo-noise frequency domain sequence back into the time domain;
- Means (WATSE) for combining said inverse transformed encoder pseudo-noise frequency domain sequence with a current frame of data of said audio signal;
- Means (TRM) for transmitting or transferring said combined audio signal frame or frames carrying said watermark data bits,
wherein the length of said encoder pseudo-noise sequence (ENCPNSEQ) is one Nth of the length of a frame of said audio signal, N being an integer number greater one,
wherein N orthogonal encoder pseudo-noise sequences (ENCPNSEQ) are used per frame of said audio signal for carrying out said combining for corresponding sections of a current frame.

7. Apparatus for regaining watermark data bits (IWATD) embedded in a spread spectrum, whereby the corresponding original watermark data bits were modulated (BVMOD) at encoder side on an encoder pseudo-noise sequence (ENCPNSEQ) and said modulated encoder pseudo-noise sequence (WATS) was transformed (WATSE) into the frequency domain and shaped in amplitude according to the masking level curve (PSYMC) of an audio signal together with which the watermark data bit information was transmitted or transferred (TRM), and said shaped encoder pseudo-noise frequency domain sequence was transformed (WATSE) back into the time domain and was combined with a current frame of data of said audio signal, wherein the length of said encoder pseudo-noise sequence (ENCPNSEQ) was one Nth of the length of a frame of said audio signal, N being an integer number greater one, wherein N orthogonal encoder pseudo-noise sequences (ENCPNSEQ) were used per frame of said audio signal for carrying out said combining for corresponding sections of a current frame, said apparatus including:
- Means (REC, SYNC) for receiving and synchronising said transmitted or transferred audio signal;
- Means (DRECMF) for convolving each one of a corresponding section of said current frame of data of said audio signal with the corresponding one of time-inversed versions (DECPNSEQ) of the N orthogonal encoder pseudo-noise sequences, and for determining, for each one of said sections, from the sign of the peak or peaks of the corresponding convolution result the value of a bit of said watermark data (OWATD).

8. Apparatus for regaining watermark data bits (IWATD) embedded in a spread spectrum, whereby the corresponding original watermark data bits were modulated (BVMOD) at encoder side on an encoder pseudo-noise sequence (ENCPNSEQ) and said modulated encoder pseudo-noise sequence (WATS) was transformed (WATSE) into the frequency domain and shaped in amplitude according to the masking level curve (PSYMC) of an audio signal together with which the watermark data bit information was transmitted or transferred (TRM), and said shaped encoder pseudo-noise frequency domain sequence was transformed (WATSE) back into the time domain and was combined with a current frame of data of said audio signal, wherein the length of said encoder pseudo-noise sequence (ENCPNSEQ) corresponded to the length of a frame of said audio signal and said encoder pseudo-noise sequence (ENCPNSEQ) was used for carrying out said combining for a current frame, said apparatus including:
- Means (REC, SYNC) for receiving and synchronising said transmitted or transferred audio signal;
- Means (EDET) for determining in the received audio signal one or more echoes and the related echo delays, and for constructing a modified decoder pseudo-noise sequence (MDECPNSEQ) based on the time-inversed version of said encoder pseudo-noise sequence (ENCPNSEQ) whereby, according to the echo delay or delays determined, correspondingly time-shifted versions of said time-inversed encoder pseudo-noise sequence are combined in order to construct said modified decoder pseudo-noise sequence;
- Means (DRECMF) for convolving said current frame of data of said audio signal with said modified decoder pseudo-noise sequence (MDECPNSEQ), and for determining from the sign of the peak or peaks of the convolution result the value of a bit of said watermark data (OWATD).

9. Apparatus according to claim 8, wherein the length of said encoder pseudo-noise sequence (ENCPNSEQ) is one Nth of the length of a frame of said audio signal, N being an integer number greater one, wherein N orthogonal encoder pseudo-noise sequences (ENCPNSEQ) were used per frame of said audio signal for carrying out said combining for corresponding sections of a current frame,
and wherein, in said determining means, the N time-inversed versions of said orthogonal encoder pseudo-noise sequences (ENCPNSEQ) for a current frame are assembled together before applying said combining,
and wherein each one of a corresponding section of said current frame of data of said audio signal is convolved in said convolving and determining means (DRECMF) with the corresponding section of said modified decoder pseudo-noise sequence (MDECPNSEQ),
- and wherein, for each one of said sections, from the sign of the peak or peaks of the corresponding convolution result the value of a bit of said watermark data (OWATD) is determined in said convolving and determining means (DRECMF).

10. Apparatus according to claim 8 or 9 wherein, in said determining means (EDET), in the received audio signal one or more echoes and the related echo delays, the results for several audio frames are evaluated before a final result on the echo delay is formed.
